# EUROPEAN PATENT SPECIFICATION

(11) **EP 2 332 005 B1**
(45) Date of publication and mention of the grant of the patent: **15.05.2013**
(21) Application number: 09812351.6
(22) Date of filing: 08.09.2009
(51) Int. Cl.: G02F 1/153

(54) **PRINTED DISPLAY SYSTEMS BASED ON POROUS SUBSTRATES**
AUF PORÖSEN SUBSTRATEN BASIERENDE GEDRUCKTE ANZEIGESYSTEME
SYSTÈMES D'AFFICHAGE IMPRIMÉS BASÉS SUR DES SUBSTRATS POREUX

(30) Priority: 08.09.2008 US 95061 P
(43) Date of publication of application: 15.06.2011
(73) Proprietor: Ntera, Inc., Radnor, PA 19087 (US); Ntera Limited, Blackrock, Co. Dublin (IE)
(72) Inventor: BRIANCON, Alain, Poolesville MD 20837 (US); MOELLER, Martin, Ballinteer Dublin 16 (IE); RYAN, Micheal, Dublin 6 (IE); LEYLAND, Nigel, Ballsbridge Dublin 4 (IE)
(74) Representative: Held, Stephan
(86) International application number: PCT/US2009/056162
(87) International publication number: WO 2010/028329

(56) References cited:
- US-A- 4 702 566
- US-A- 5 912 759
- US-A1- 2005 210 672
- US-A1- 2005 253 801
- US-A1- 2006 014 068
- US-A1- 2006 066 933

## Description

### FIELD OF INVENTION

The present invention generally relates to etectrochromic devices. More particulary, the present invention relates to novel monolith architectures for electrochromic device and substrate for use therein.

### BACKGROUND

Electrochromic materials (often referred to as Chromogens) exhibit reversible or irreversible color change when the compounds gain or lose electrons, or react to protons. Electrochromic devices that exploit the inherent properties of electrochromic compounds find application in large area static displays and automatically dimming mirrors, and are well known.

Electrochromic display/color changing devices create images by patterning the chromogens in specific areas and then selectively modulating across the display. A color-changing device will have a variety of properties depending on the electrochromic material used for the structure. The color change can be from transparent to colored, from one color hue to another hue, among others. The electro-optical effects can be bistable (where an image is retained on the display until forced to disappear), self-erasing (where an image disappears shortly after the application of charge), or permanent (where an image appears due to one or more irreversible process and thus, cannot be forced into its original condition). The electro-optic effects of these electrochromic displays may be based on reduction effect (where electrons are being provided to a chromophore structure) or oxidation effect (where electrons are being removed from the chromophore structure) such as those displays disclosed in U.S. patents 6,301,038 and 6,870,657. Electro-optic effects can also be created by change in pH level through halochromic effect where protons are being generated or removed as disclosed in U.S. patents No 6,879,424, 7,054,050. Display/color change effect can also take place through ionochromic effect.

A multitude of controlled chromic patterns may individually function as pixels to collectively create a high-resolution image. Typically, these display devices contain a reflective layer underneath the electrochromic compound, respective to the viewer, for reflecting light allowed to pass beyond the electrochromíc region Simply put, the electrochromic segment (whether a icon, image, or part of segmented structure such as digit or letter) acts as a shutter either blocking light or allowing light to pass through to the underlying reflective layer.

Thin displays are becoming popular for use in many applications due to their low weight, high contrast ratio, and ability to be integrated in new form factors. To achieve this, it is preferable to create displays that only require a single substrate.

Unlike LCD systems (nematic, twisted nematic, cholesteric) that rely on a critical gap for operation, technology such as electrochromic can rely on a single substrate, having the different layers required printed as a single monolithic stack.

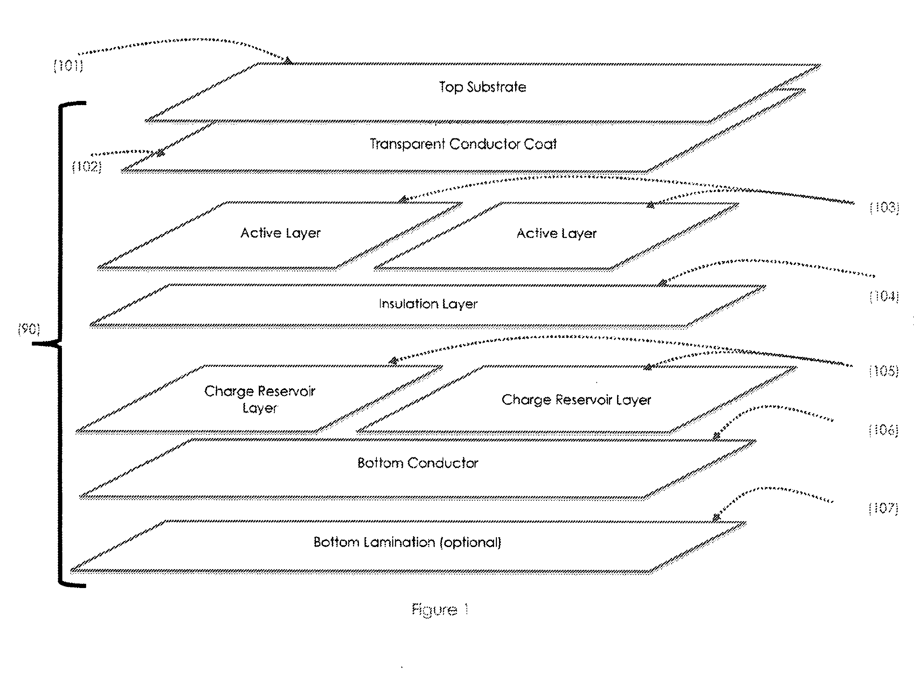

A traditional printed electrochromic structure is based on an electrochromic display structure 100 as illustrated in Figure 1. This monolith electrochromic display structure 100 is viewed from the top of the display through the top substrate 101. This substrate 101 includes flexible material such as PET, PETG, PEN, thin glass, bendable glass, or any other transparent material On this substrate 101, a transparent conductor material (metal, organic, semiconductor) layer 102 is printed on part of the inside of the display. The deposition may be performed using a multiple of means such as printing, sputtering, ion beam deposition. On the bottom interface of layer 102, a layer 103 of electrochromic material is printed. The layer 103 can be patterned or un-patterned The areas(s) of electrochromic material function as one or more electrodes ("SEG") or generally associated with the anode side. The area for such an electrode corresponds to active color area of the color changing structure. In one embodiment, the layer 103 of the one or more electrodes 103 will be totally covered by the area of the transparent conductor 102 layer. In another embodiment, the layer 103 of the one or more electrodes is built using a material with good lateral conductivity wherein the layer 103 may be incompletely covered by the area of the transparent conductor 102 layer. In yet another embodiment, as long as there is contact between the transparent conductor layer 102 and the layer for the SEG electrodes 103, the color changing structure will change color. An insulation layer 104 is placed next to layer 103 covering its entire area of to insulate the SEG electrodes from the charge reservoir layer 105 ("COM") or generality associated with the cathode side. Layer 104 is a porous insulating layer that allows ionic motion but precludes electronic iiiofioti. The area of the charge reservoir layer 105 fits within the area of the insulation layer 104. A bottom conductor layer 106 is printed below and covers the entire area of the charge reservoir layer 105. This layer 106 can be patterned. It can be conductive over its entire area, or partially if coating has been applied. An optional lamination layer 107 may be applied to the bottom conductor layer 106 for protection

The electrochromic material can be printed on films or part of the electrolyte structure. The electrolyte structure can be a liquid, water based, a gel, a polymer, an oligomer, or a molted salt (e.g. ionic liquid).

The insulation layer 104 is typically a porous structure saturated in electrolyte is preferably electrically insulating, but nothing precludes the inclusion of redox elements in the electrolyte to create a self-erasing structure. The electrolyte, in charge reservoir layer 105, should be as pure as possible, but nothing preludes the inclusions of impurities and/or chemical elements/compound used to perform irreversible transformation of the SEG layer 103.
An electrochromic display having all the features of claim 1 is disclosed in US 2005210672.

### SUMMARY

The present disclosure provides for printed display. The display includes: a porous substrate structure; a first functional layer; a second functional layer; and an electrolyte layer percolated within the porous substrate structure. The porous substrate structure is disposed between the first functional layer and the second functional layer.

The first functional layer is printed and corresponds to a coloring layer is composed of one or more coloring areas and the second functional layer corresponds to a capacitive layer. The first functional layer or the second functional layer is at least partially embedded within the porous substrate structure.

In one embodiment, the display includes a third functional layer disposed over or under the first functional layer. In one such embodiment, the third functional layer corresponds to a conductor layer.

In another embodiment, the display includes a fourth functional layer disposed over the second functional layer. In one such embodiment, the fourth functonal layer corresponds to a conductor layer.

In accordance with yet another aspect, the present disclosure provides for a method of manufacturing said printed display. The method includes the steps of printing onto the porous substrate structure with a first functional ink associated with the first functional layer printing onto the porous substrate structure with a second functional ink associated with the second functional layer_{;} and printing onto a porous substrate structure with an electrolyte functional ink wherein at least the electrolyte functional ink percolates through the porous substrate structure. The porous substrate structure has a first substrate side and a second substrate side and the two sides are substantially parallel to each other. In one such embodiment, the printing steps are performed on one or more of following the thirst substrate side, the second substrate side or combinations thereof.

In one embodiment, the printing steps are performed using one machine or two or more machines.

In another embodiment, the printing steps are performed using a printing technique including screen printing, flexography, gravure, lithography, inkjet, painting, spraying, aerosol, electrosiatic printing, laser printing, or combinations thereof.

In still yet another embodiment, the method may include one or more drying steps. In one such embodiment, the drying step may be performed at a temperature less than 150 °C. In another such embodiment, the drying step may be performed at a temperature less than 80 °C.

### BRIEF DESCRIPTION OF THE DRAWINGS

The accompanying drawings, which are included to provide further understanding of the disclosure and are incorporated in and constitute a part of this specification, illustrate embodiments of the disclosure and, together with the description, serve to explain the principles of the disclosure.

In the drawings:

Figure 1 illustrates a prior art display device;

Figure 2 illustrates an exemplary displays device of the present disclosure;

Figures 3a-3c illustrate various exemplary display devices of the present disclosure;

Figure 4 illustrates a exemplary method of manufacturing a printed display device of the present invention;

Figure 5 illustrates a exemplary method of manufacturing a printed display device of the present invention;

Figure 6 illustrates exemplary display devices of the present invention; and

Figure 7 illustrates an exemplary three dimensional article incorporating a display device of the present invention.

### DESCRIPTION OF THE EMBODIMENTS

Reference will now be made in detail to the embodiments of the present disclosure. examples of which are illustrated in the accompanying drawings. Wherever possible, the same reference number will be used throughout the drawings to refer to the same or like parts.

We have discovered that recent advancements in microporous sheet or film material allow unexpected significant simplification of display design by changing the nature of the substrate to a material having a porous structure that can be inserted inside the display structure or the back of the display. By doing so, the porous substrate provides the shape of the overall displays (or inlay that comprises the display) and provides the skeletal structure of the display. In such a device, the porous substrate can provide the function a) of being a mechanically stable matrix for layer deposition and b) to electrically separate layers printed on opposite sides of the substrate. These porous substrates can be homogeneous, that is composed of a single material with a consistent pore size across the entire material thickness and area. These porous substrates can also be heterogeneous where different pore sizes are present at different locations within the substrate. In all cases, the substrate contributes to the structure of the display.

Porosity, pore size and pore size distribution of the porous substrate can be controlled using a host of techniques such as those listed in US Patent No. 5,120,594 and its references. In particular, control of pore sizes may he important when the printing process involved is based on liquid functional inks (e.g. screen printing, flexographic printing, rotogravure printing, inkjet printing and others), because dispersed particles as part of the functional ink could migrate through the porous network of the substrate during processing. E.g., in case of conductive or semi-conductive particles, the migrated particles may form a percolation network through the porous substrate. Depending on the application of the resulting device, the level of electrical insulation could be insufficient. Ideally, the pore size of the porous substrate is smaller than the primary particle size of any conductive material being printed onto the substrate. This is done so that the conductive inks do not embed inside the substrate. Furthermore, if nano-particulate conductive materials are used, it is useful that the pores of the substrate are also in the nanometer range. If only micrometer sized conductive particles are involved, the pores of the porous substrate could also be in the micrometer range. Depending on the particle size of the conductive materials in contact with the porous substrate, maximum pore sizes of substrates may be suitable in the range from 0.01 to 50 micrometer. The control of the pore size may also be important, but of a lesser degree, when printing processes are used which are not based on inks (like e.g. laser printing). In such a case, there is no solvent present acting as a carrier for dispersed particles within a functional ink to migrate into the network of the porous substrate, and thus, the probability of the formation of a percolation network is reduced.

As stated, the porous substrate can also be heterogeneous, composed of multiple layers with different porosity and pore sizes at different locations. Having the center layer of a multi-layer substrate with a lower pore size than the periphery of the substrate allows percolation of functional inks with smaller particulates to the center of the structure while leaving functional inks with larger particulates to remain at the periphery of the substrate. This could be realized by having a multi layered substrate with e.g. a pore size in the sub micrometer range in the center and a pore sizes of above one micrometer in the surface layers. The substrate may be comprised of fibers, particles, polymer, foam among others or combination. The substrates can be continuous (the entire porous network is interconnected allowing functional inks to potentially percolate throughout the substrate. They can be discontinuous enhancing patterning inside the substrate. If the substrate is heterogeneous and thus exhibits different porosity characteristics at different depths and/or locations on the substrate, the resulting percolation networks will in term show differences, that is become patterned.

A porous substrate has inherently a higher surface area than non porous substrates. This facilitates the thermal removal of solvents in inks. Combining this phenomena with the creation of inks with more volatile solvents and reduced amount of binders enable a reduction in the drying temperature from the traditional display drying temperatures of about 300 °C or so range to temperatures as low has 80 °C. The use of porous substrates is also compatible with UV and radiation based drying techniques.

These advancements open the possibility for plastic, textile, paper and other substrates to be used for the creation of displays and printed electronics devices. This is accomplished through the application in a sequential and patterned manner of functional inks. Unlike graphic inks which only provide color, functional inks provide different electrical properties such as conductive electrically, conductive ionically, isolative ionically, isolative electrically, semi-conductive electrically, or optical color changing properties when certain physical or chemical properties are present (Charge, pH, temperature among other). These properties can be fixed or varying based on chemical, physical or electrical conditions. Printing can be realized using sheet feed and roll-to-roll manufacturing in a cost effective manner. Inkjet, flexographic, gravure, screen-printing can be readily used to print displays. Laserprinting and other forms of electrostatic printing can also be utilized. We should note that not all layers in a printed display need to be printed using the same printing technology. In another case, the control of the pore size may be important, but of a lesser degree, when an electrolyte layer is applied before any other functional layer is printed. This can be accomplished by printing an electrolyte material or dipping the substrate in a bath of electrolyte. The electrolyte can infiltrate the porous materials and acts as a barrier for any other printed layer. To be able to print further layers, such an electrolyte layer needs to provide a dry surface after processing. E.g., gel type and polymer/salt type electrolytes could be used. A polymer as part of the electrolyte system could also be formed in situ, i.e. monomers or oligomers of crosslinkable materials react after printing.

Paper substrates are used regularly for packaging and tag applications. They provide the structural component of the device. Using a paper substrate allows the creation of smart packages where functional displays, sensors, batteries, capacitors and other printed electronic devices are integrated with static marketing, brand, and other information printed directly the package. Paper can readily be folded into three-dimensional boxes and structures. In such a case, the substrate is ultimately folded into the product final shape. Smart packaging also allows the integration with RFID tags where the antenna is also printed on the same substrate. It can also integrate sensors (say temperature sensor to keep track of shipping or ammonia detection sensor to keep track of spoilage). Plastic porous substrates are emerging as a viable substrate for banknotes, passports and other security/high value documents. The introduction of a dynamic chromic capability directly onto the same substrate enables new methods of authentication and identifications heretofore impossible to achieve because these structures were created by integrating structures with different substrates. The mechanical integrity of a single substrate structure is also useful to create anti-tampering solutions. Pressure sensitive and other type of adhesives can applied to the back of the display to facilitate post professing. This adhesive can be conductive, isolative. It can be patterned to facilitate alignment and reduce cost.

The present invention relates to printed electronic systems (typically chromic) that use a porous substrate as part of their structure. There are many chromic effects that can be integrated witch such structures. Photochromism, (as described in US patents 6,864,299 and 4,134,853) Thermochromism (as described in US patents 7,370,689 and 5,997,849), Halochromism (as described in US Patent 4,186,134 and US patent application 2009185956), Solvatochromism (as described in US Patent application US2006/034039) Ionochromism (as described in US Patents 6,395,561 and 7,288,663), Tribochromism (as described in US patent application 2006/0286049), Piezochromism (as described in US patent applications 2004/0216732 and 2007/02559286), Electrochromism (as described in US patent 7,358,358).

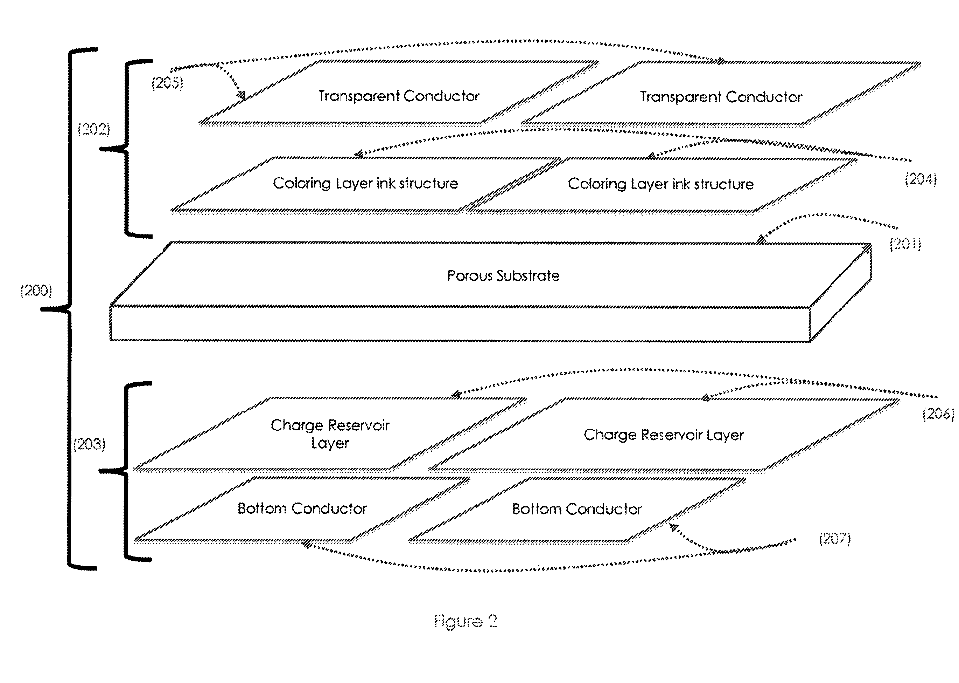

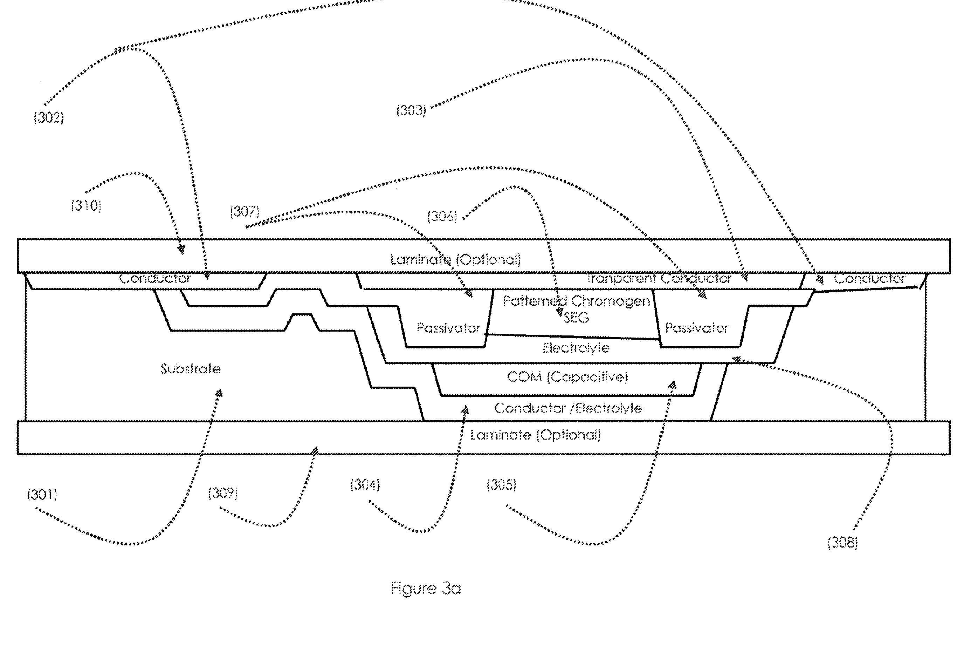

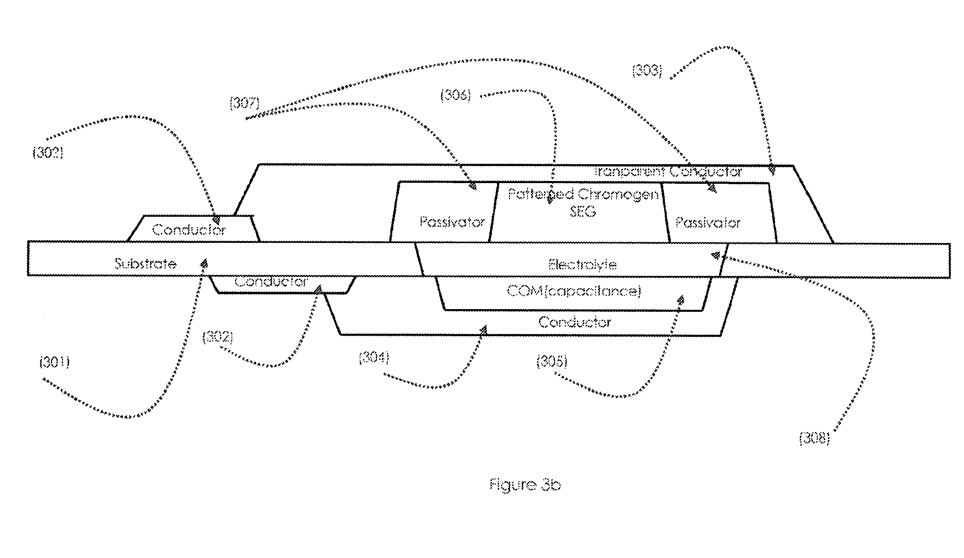

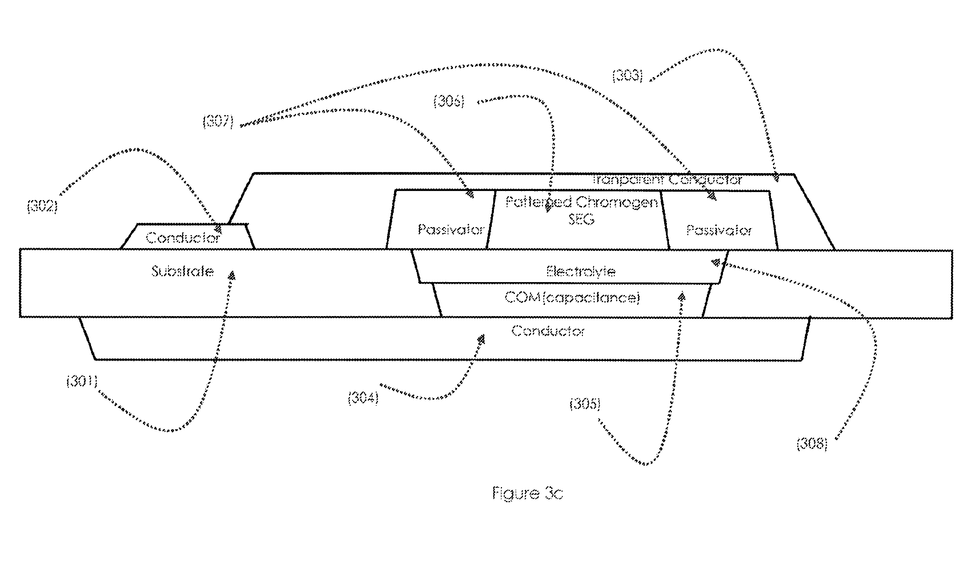

In one embodiment, the substrate is used as the center of the display as illustrated in Figures 2 and 3. This porous substrate can be a constituted of say an untreated paper or foam, that is homogeneous. It can be a polymer substrate such as those used in Australian and Guatemalan banknotes or polyethylene fiber such as those used in Costa Rican banknotes. The substrate can be heterogeneous as well. This can achieved using a variety of means. The paper can have been coated with calcium carbonate, china clay, silicone composition. Rotogravure, spray atomization are two of many techniques available in printing industry to achieve these results (see references listed in US patent 6,761,800). Another way to achieve a heterogeneous substrate is through the printing of a precise amount of foam one side of the substrate. This substrate could be paper, or a single layer polyolefin matrix (such as PPG's Telsin). Another way to achieve a heterogeneous substrate is to use two substrates, collate them, deposit a pressure sensitive adhesive between them and calendar the entire structure.

In another embodiment, the porous substrate structure is used as the back of the display, This can achieved by modifying the structure described in US patent 7,460,289 (that uses glass, ceramic, plastic, or metal substrate) by using functional inks for the counter and working electrodes that are compatible with deposition on a porous surface.

In another embodiment, the substrate is paper. The thicker the substrate, the more structurally rigid the display is. Using a thickness bigger than 15 micrometer allows the manufacturing of display using roll to roll printing equipment typically used to print on non porous substrates. Using substrates 50 micrometer thick allows the creation of wide range of products where the substrate is the sole supporting structures, as say a banknote.

In another embodiment, the substrate is a foam. The form can be continuous or discontinuous.

In another embodiment, the substrate is a textile.

In another embodiment, the substrate is a packed stack of individual substrates, that is collated substrates. This allows the creation of substrate with heterogeneous porosity. Paper can be one of those collated substrates.

The sequential localized printing of different functional inks (conductor, electrolyte, semi conductors and chromogen) into the porous substrate (optionally requiring in some embodiments drying or curing steps) allow monolith structures to be created for numerous applications heretofore impossible to achieve. One such application would be the introduction of a dynamic watermark for a banknote.

The introduction of a porous substrate results in unexpected enhanced key performances such as power consumption, bistability, mechanical strength, and conformability. Manufacturing of a porous substrate is, from a process point of view, entirely different compared to printing a layer onto a previously printed layer. Depending on the physical mature of a porous substrate or printed porous layer, the different ways of manufacturing may lead to different advantages and disadvantages with regards to production of a pin hole free barrier for conducting particles coming in contact in a further or previous manufacturing step. Furthermore, manufacturing of substrates is generally done on a larger scale compared to printing functional materials and thus, in principle under better control. Prevention of pinholes in porous substrates should be therefore feasible at significantly lower costs and efforts compared to printed separators. Another risk minimizing aspect of using a porous substrate is that such a substrate can undergo quality control measures before starting the device manufacturing process. When a printed separator is used and a pinhole creating process failure happens, all materials and processes up to the separation layer would be involved. An ideal pinhole free separator with a controlled pore size should provide complete electrical separation, assuming that pore size matches with the requirements given by other materials which come in contact with the separator. The better the electrical separation between the COM (of the working electrode) and SEG layer (of the counter electrode), the lower the current losses are when coloring the device. An improved separation also means that discharge through the separator will be reduced and bistability will be improved. Alone or together those phenomena improve the power consumption of a display. When layers are printed on top of layers, the overall mechanical interaction between materials reduced mechanical strength, especially when a layer is being Printed on top a film not totally dried. The introduction of a substrate as a separator reduces the number of layers printed on top of one another from 6/7 to about 2/3 on each side of the substrate. Conformability is helped by the fact that the display can be printed directly in the product when it is made out of foam or when foam has been printed on it. In addition, the present invention also relates to the impact of porous substrate on the manufacturing process of displays, namely ability to support sheet and roll to roll manufacturing processes (paper substrates have been the norm in printing for centuries in traditional printing) reducing number of printing steps (we do not need to print and dry a separator layer between working and counter electrode, therefore removing a printing step right ware) and relaxing of manufacturing conditions (as printing could take place on both sides of a substrate before requiring drying and thus reduce the number of overall drying cycles).

In another embodiment the display is manufactured at a single site.

In another embodiment, the display is manufactured along with a traditional printed structure and can thus be further shaped or laminated, clad or calendared. Laminating can be done using a cold or a hot process These post-processing are used to adapt the display to the device it is integrated within, to provide mechanical protection among other properties. Examples of laminates are PET, PEN, or polycarbonates films, among others.

Figure 2 shows a typical representation of one embodiment of an electrochromic display (200). It has three principal functional sections. A substrate (201) which provides structure to the other parts of the display, the coloring part of the display, aka SEG, (202) and the charge reservoir part of the display, aka COM, (203). In an embodiment, the substrate (21) is porous but electronically insulating. The SEG section is composed of a set of coloring layer ink structures (204). These structures can themselves be composed of multiple functional inks (not shown in this diagram). These functional ink structures are printed/printed into the substrate where they are held. The next set of structures in the SEG section are patterned transparent conductors (205) also printed in the substrate It should be noted that the location of layers 204 and 205 can be inverted. On the COM side, a patterned charge reservoir layer (206) is printed inside the substrate Then, a bottom conductor structure (207) is printed. The bottom conductor structure (207) can be patterned. The display front side is the side where the SEG layer is present, the backside the other side.

Figures 3a, b, c show different electrochromic systems, the difference between these is the amount of inks that have percolated inside the substrate passed on the make up of inks and substrate.

Figure 3 a shows a cut through view of one embodiment of a highly porous substrate (301) borne display that has been constructed through the sequential printing of different functional inks in more details. Note that all the functional inks (whether dried or not) shown through this figure are embedded inside the substrate structure, as the solid components inside in the inks used to print the display are smaller than the pores inside the substrate. This display is connected through external power sources through conductive pads (302) typically composed of a metallic ink such as silver, copper, or carbon. These pads are touching transparent conductor (303) on the front side of the display or generic conductor (304) on the backside of the display The back conductor touches a capacitive change reservoir (305) composed of a material such as Antimony Tin Oxide or Carbon, immersed in an electrolyte. Electrolytes that can be used in these structures are among others those listed in US patents 6,301,038, 6,870,657, 7,489,432, US patent application pro-grant publication 2006/0110638, US provisional patent application 61/155,014, and 61/225407. It should be noted that a single electrolyte can be used for all the inks in the display or that different electrolytes can be used for different inks and thus functional layers created with those inks. The coloring layer (306) composed of a conductive ink including chromogen is connected to the transparent conductor. This conductive ink is often comprised of nanoparticles, binder, solvents, dispersants, and other additives. Examples of formulation of such functional inks are among others those listed in US patents 6,301,038, 6,870,657, 7,489,432, US patent application pre-grant publication 2006/0110638, US provisional patent application 61/155,014, and 61/225407. This conductive coloring layer can be continuous or discontinuous. Optional passivator structures (307) are patterned around the different segments of the coloring layer. An electrolyte layer (308) allows ionic conduction between the front color part of the display (302,306) (the SEG part of Figure 2) and the back part of the display (304,305) (the COM part of Figure 2). Complementing and protection the core of the display, a back laminate (309) and/or a front laminate (310) can be applied. These laminates are used for protection. They can also be coated with pressure adhesive material for further integration in products.

Figure 3b is the same structure as in figure 3a with three notables exception. We have not shown the optional front (310) and back laminates (309). The choice of porosity and inks make that only the electrolyte (308) percolates inside the substrate. This effect can be achieved by printing the electrolyte onto the substrate or by dipping the substrate through a tank tilled with electrolyte. The other inks when printed and dried stay outside the display. This embodiment is achieved by using a substrate with low porosity and inks, except for the electrolyte, with particles of effective diameter larger than the pore size.

Figure 3c is the same structure as in figure 3b with a notable exception. The porosity of the substrate is chosen so that the COM ink (305) percolates inside the substrate. SEG ink (306), Passivator (307), conductors (302, 304, 303) do not percolate the substrate (because they are drying powders or the size of particles in the inks are chosen to be larger than tlle pores of the substrate. In an embodiment the Passivator (307) is optional.

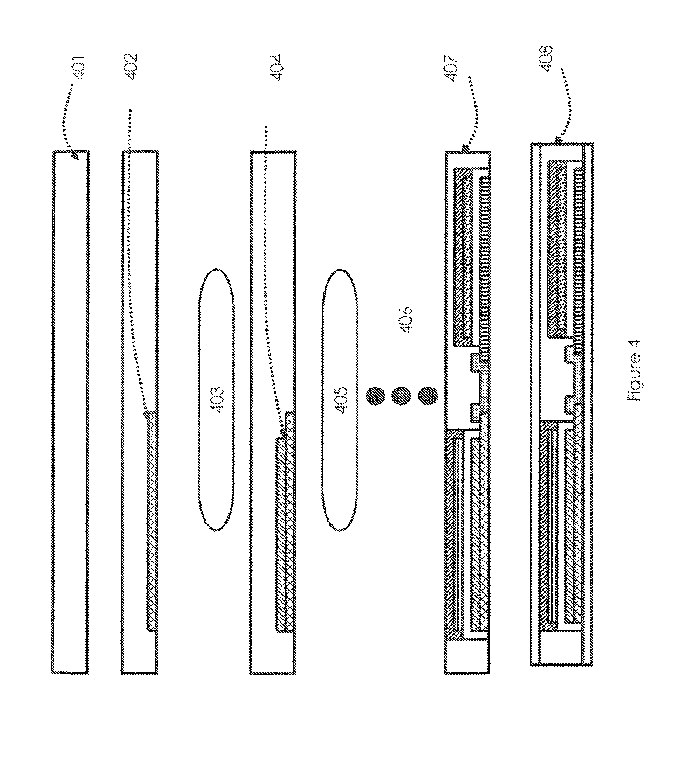

Figure 4 illustrates the key steps associated with the creation of a printed display leveraging a porous substrate (401). This substrate can be chosen from any of the morphologies describedherein, above. It can be homogeneous, heterogeneous (in either the transversal direction or within the substrate-the later more readily achievable). A first layer is applied (402) over a specific area and through design of ink rheology, quantity and deposition apparatus a specific thickness. Note that at least the electrolyte (whether dried or not) shown through this figure is embedded inside the substrate structure. One of the advantages of using porous material is the leverage of a high surface area that captures and hold ink in. This phenomenon accelerates the effective drying process. A curing step (using UV lighting or drying) can be applied at this point (403). The next layer (404) is then applied from the same side of the substrate, again with control over area and depth. Layer (404) can touch or not touch layer (402). A curing step (using UV lighting or drying) can be applied at this point (405). The process repeats itself as needed (406) until the last layer (407) is applied to the structure. At that point, an optional encapsulating structure (408) can be applied on all or part of the display. To create a display that is bistable (that is a display that retains color when charges, we must ensure that SEG and COM do not contact. This is achieved by matching porosity with particle size or using a dry powder/toner ink.

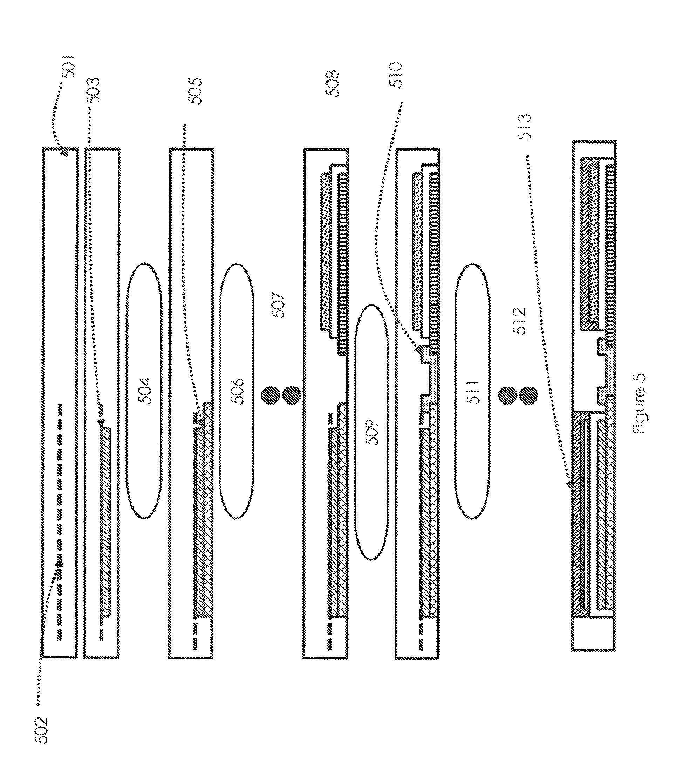

Figure 5 illustrates the key steps associated with the creation of a printed display such as the one shown in figure 3a leveraging a heterogeneous porous substrate (501) that includes an area with a lower porosity (502). This can be achieved by collating and glueing three substrates with different porosities together, using for the center substrate one with higher bulk density of material (and thus lower porosity). This can also be achieved by using two collated and glued substrates built using the embossing techniques described in US Patent 5,120,594. This type of porosity allows the better control of the diffusion of functional inks during the printing process and thus better control over the depth of penetration of liquids (solvents or colloid alike) inside the substrate. A first layer is applied (503) over a specific area supported by the low porosity area (502) and through design of ink rheology, ink quantity and deposition apparatus a specific thickness from the first side of the substrate. Note that all the inks (whether dried or not) shown through this figure are embedded inside the substrate structure. A curing step (using UV lighting, application of radiation or drying) can be applied at this point (504). The next layer (505) is then applied from the same side of the substrate, again with control over area and depth. Layer (505) can touch or not touch layer (503). A curing step (using UV lighting or drying) can he applied at this point (506). The process repeats itself as needed (507) until the final first side layer (508) is applied to the structure. A curing step (using UV lighting or drying) can be applied at this point (509). A layer (510) is printed from the second side of the substrate A curing step (using UV lighting or drying) can be applied at this point (511). Additional layers (512) are printed as needed until the last layer is printed (513).

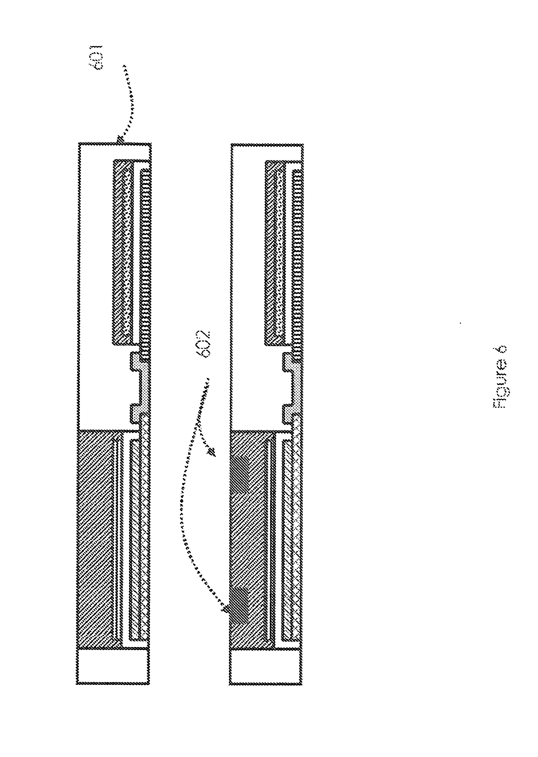

Figure 6 illustrates the principles behind a prefabricated display. A prefabricated display (601) such as the one in figure 2 is prepared except for the chromogen layer or elements of the chromogen layers. That layer (602), patterned specially for each application, is applied as the last step.

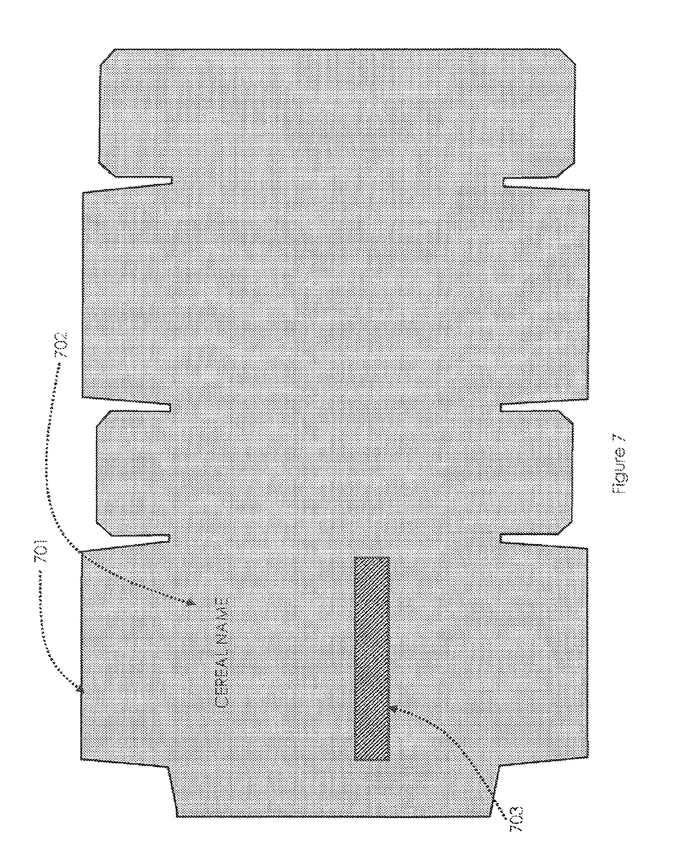

Figure 7 illustrates a device where the use of a common substrate between traditional printing and electrochromic display is being leveraged. In this example, a cereal box (701) before being folded build on a porous substrate such as paper with a traditional printed structure (702) and a display (703).

The present disclosure may be embodied in other specific forms without departing from the spirit or essential attributes of the disclosure. Accordingly, reference should be made to the appended claims, rather than the foregoing specification, as indicating the scope of the disclosure. Although the foregoing description is directed to the embodiments of the disclosure, it is noted that other variations and modification will be apparent to those skilled in the art, and may be made without departing from the scope of the disclosure.

## Claims

1. An electrochronic display comprising
a porous substrate structure (201, 301);
a first functional layer (204, 306);
a second functional layer (206, 305); and
an electrolyte layer (308) percolated within the porous substrate structure,
wherein the first functional layer corresponds to a coloring layer composed of one or more patterned coloring areas and the second functional layer corresponds to a capacitive layer,
wherein the porous substrate structure is disposed between the first functional layer at the front side of the display and the second functional layer at the front side of the display, wherein the first functional and second functional layers are printed, **characterised in that**
the first functional layer or the second functional layer is at least partially embedded within the porous substrate structure.

2. A display according to Claim 1, further comprising a third functional layer (205, 303) disposed over or under the first functional layer.

3. A display according to Claims 1 or 2, wherein the third functional layer corresponds to a conductor layer.

4. A display according to Claims 1, 2, or 3, further comprising a fourth functional layer (207,304) disposed at the back side of the display over the second functional layer.

5. A display according to any one of Claims 1-4, wherein the porous substrate structure is composed of one or more of a plurality of collated substrates.

6. A display according to Claim 1, wherein the porous substrate structure provides a substantially principal structural component of the display.

7. A display according to any one of Claims 5-6, further comprising a first laminate layer disposed at the front side of the display over the third functional layer and a second laminate layer (309) disposed at the back side of the display over the fourth functional layer.

8. A display according to any one of Claims 1-6 wherein the porous substrate further comprises one or more of printed electronic device.

9. A method of manufacturing of display of any one of Claims 1-7, comprising the steps of:
Percolating the porous substrate structure with an electrolyte functional ink wherein at least the electrolyte functional ink percolates through the porous substrate structure so as to represent the electrolyte layer;
printing the porous substrate structure having the electrolyte percolated therein with a first functional ink associated with the first functional layer;
printing the porous substrate structure having the electrolyte percolated therein with a second functional ink associated with the second functional layer.

10. The method of claim 9, wherein the porous substrate is printed with the electrolyte functional ink.

11. A method of manufacturing a display such in Claims 9 or 10, wherein the printing steps are performed using a printing technique selected from the group consisting of: screen printing, flexography, gravure, lithography, inkjet, painting, spraying, aerosol, electrostatic printing, laser printing, or combinations thereof.

12. A method of manufacturing a display such in Claims 9 or 10 wherein the printing steps are performed by at least two print facilities.

## Patentansprüche

1. Elektrochrome Anzeige, die umfasst:
eine poröse Substratstruktur (201, 301);
eine erste Funktionsschicht (204, 306);
eine zweite Funktionsschicht (206, 305); und
eine Elektrolytschicht (308), die innerhalb der porösen Substratstruktur perkoliert ist,
wobei die erste Funktionsschicht einer Farbschicht entspricht, die aus einem oder mehreren gemusterten Farbbereichen zusammengesetzt ist, und die zweite Funktionsschicht einer kapazitiven Schicht entspricht,
wobei die poröse Substratstruktur zwischen der ersten Funktionsschicht an der Vorderseite der Anzeige und der zweiten Funktionsschicht an der Rückseite der Anzeige angeordnet ist, wobei die erste und die zweite Funktionsschicht gedruckt sind, **dadurch gekennzeichnet, dass**
die erste Funktionsschicht oder die zweite Funktionsschicht mindestens teilweise in die poröse Substratschicht eingebettet ist.

2. Anzeige nach Anspruch 1, die ferner eine dritte Funktionsschicht (205, 303) umfasst, die über oder unter der ersten Funktionsschicht angeordnet ist.

3. Anzeige nach den Ansprüchen 1 oder 2, wobei die dritte Funktionsschicht einer Leiterschicht entspricht.

4. Anzeige nach den Ansprüchen 1, 2 oder 3, die ferner eine vierte Funktionsschicht (207, 304) umfasst, die an der Rückseite der Anzeige über der zweiten Funktionsschicht angeordnet ist.

5. Anzeige nach einem der Ansprüche 1-4, wobei die poröse Substratstruktur aus einem oder mehreren von mehreren kollationierten Substraten zusammengesetzt ist.

6. Anzeige nach Anspruch 1, wobei die poröse Substratschicht eine wesentliche Hauptstrukturkomponente der Anzeige liefert.

7. Anzeige nach einem der Ansprüche 5-6, die ferner eine erste Laminatschicht (310), die an der Vorderseite der Anzeige über der dritten Funktionsschicht angeordnet ist, und eine zweite Laminatschicht (309), die an der Rückseite der Anzeige über der vierten Funktionsschicht angeordnet ist, umfasst.

8. Anzeige nach einem der Ansprüche 1-6, wobei das poröse Substrat ferner eine oder mehrere gedruckte elektronische Vorrichtungen umfasst.

9. Verfahren zum Herstellen einer Anzeige nach einem der Ansprüche 1-7, das die Schritte umfasst:
Perkolieren der porösen Substratstruktur mit einer Elektrolyt-Funktionstinte,
wobei mindestens die Elektrolyt-Funktionstinte die poröse Substratstruktur durchdringt, um die Elektrolyt-Schicht zu repräsentieren;
Drucken der porösen Substratstruktur, in die der Elektrolyt perkoliert ist, mit einer ersten Funktionstinte, die der ersten Funktionsschicht zugeordnet ist;
Drucken der porösen Substratstruktur, in die der Elektrolyt perkoliert ist, mit einer zweiten Funktionstinte, die der zweiten Funktionsschicht zugeordnet ist.

10. Verfahren nach Anspruch 9, wobei das poröse Substrat mit der Elektrolyt-Funktionstinte bedruckt wird.

11. Verfahren zum Herstellen einer Anzeige nach den Ansprüchen 9 oder10, wobei die Druckschritte unter Verwendung einer Drucktechnik ausgeführt werden, die aus der Gruppe ausgewählt ist, die besteht aus: Siebdrucktechnik, Flexographie, Tiefdruck, Lithographie, Tintenstrahl, Malerei, Sprühen, Aerosol, elektrostatisches Drucken, Laserdrucken oder Kombinationen davon.

12. Verfahren zum Herstellen einer Anzeige nach den Ansprüchen 9 oder 10, wobei die Druckschritte durch mindestens zwei Druckeinrichtungen ausgeführt werden.

## Revendications

1. Dispositif d'affichage électrochromique comprenant une structure de substrat poreux (201, 301) ;
une première couche fonctionnelle (204, 306) ;
une deuxième couche fonctionnelle (206, 305) ; et
une couche d'électrolyte (308) percolée dans la structure de substrat poreux,
où la première couche fonctionnelle correspond à une couche de coloration composée d'une ou de plusieurs zones de coloration mises en forme et la deuxième couche fonctionnelle correspond à une couche capacitive,
où la structure de substrat poreux est disposée entre la première couche fonctionnelle au niveau de la face avant du dispositif d'affichage et la deuxième couche fonctionnelle au niveau de la face arrière du dispositif d'affichage, où la première couche fonctionnelle et la deuxième couche fonctionnelle sont imprimées, **caractérisé en ce que**
la première couche fonctionnelle ou la deuxième couche fonctionnelle est au moins partiellement incorporée dans la structure de substrat poreux.

2. Dispositif d'affichage selon la revendication 1, comprenant en outre une troisième couche fonctionnelle (205, 303) disposée au-dessus de la première couche fonctionnelle ou en dessous de celle-ci.

3. Dispositif d'affichage selon la revendications 1 ou 2, dans lequel la troisième couche fonctionnelle correspond à une couche conductrice.

4. Dispositif d'affichage selon la revendications 1, 2 ou 3, comprenant en outre une quatrième couche fonctionnelle (207, 304) disposée au niveau de la face arrière du dispositif d'affichage sur la deuxième couche fonctionnelle.

5. Dispositif d'affichage selon l'une quelconque des revendications 1-4, dans lequel la structure de substrat poreux est composée d'un ou de plusieurs substrats parmi une pluralité de substrats assemblés.

6. Dispositif d'affichage selon la revendication 1, dans lequel la structure de substrat poreux fournit un composant de structure essentiellement principal du dispositif d'affichage.

7. Dispositif d'affichage selon l'une quelconque des revendications 5-6, comprenant en outre une première couche stratifiée (310) disposée au niveau de la face avant du dispositif d'affichage sur la troisième couche fonctionnelle et une deuxième couche stratifiée (309) disposée au niveau de la face arrière du dispositif d'affichage sur la quatrième couche fonctionnelle.

8. Dispositif d'affichage selon l'une quelconque des revendications 1-6, dans lequel le substrat poreux comprend en outre un ou plusieurs dispositifs électroniques imprimés.

9. Procédé de fabrication de dispositif d'affichage de l'une quelconque des revendications 1-7, comprenant les étapes consistant :
à faire percoler à travers la structure de substrat poreux une encre fonctionnelle électrolytique où au moins l'encre fonctionnelle électrolytique percole à travers la structure de substrat poreux afin de représenter la couche d'électrolyte ;
à imprimer la structure de substrat poreux ayant l'électrolyte percolé dedans avec une première encre fonctionnelle associée à la première couche fonctionnelle ;
à imprimer la structure de substrat poreux ayant l'électrolyte percolé dedans avec une deuxième encre fonctionnelle associée à la deuxième couche fonctionnelle.

10. Procédé de la revendication 9, dans lequel le substrat poreux est imprimé avec de l'encre fonctionnelle électrolytique.

11. Procédé de fabrication d'un dispositif d'affichage selon la revendication 9 ou 10, dans lequel les étapes d'impression sont exécutées en utilisant une technique d'impression choisie parmi le groupe constitué : de la sérigraphie, de la flexographie, de la gravure, de la lithographie, du jet d'encre, de la peinture, de la pulvérisation, de l'aérosol, de l'impression électrostatique, de l'impression au laser, ou de leurs combinaisons.

12. Procédé de fabrication d'un dispositif d'affichage selon la revendication 9 ou 10, dans lequel les étapes d'impression sont exécutées par au moins deux équipements d'impression.
